# EUROPEAN PATENT APPLICATION

(11) **EP 3 188 152 A1**
(43) Date of publication of application: **05.07.2017**
(21) Application number: 16753241.5
(22) Date of filing: 12.05.2016
(51) Int. Cl.: G08G 1/0962, H02J 7/00

(54) **CHARGING POST AND SMART TRAFFIC SYSTEM**

(30) Priority: 30.10.2015 CN 201510729663
(71) Applicant: LE Holdings (Beijing) Co., Ltd., Beijing 100025 (CN); Leauto Intelligent Technology (BEIJING) Co. Ltd, Beijing 100025 (CN)
(72) Inventor: LI, Wenrui, Beijing 100025 (CN); XU, Yong, Beijing 100025 (CN); ZOU, Yu, Beijing 100025 (CN); CHEN, Kunsheng, Beijing 100025 (CN); LIN, Wei, Beijing 100025 (CN); LIU, Peng, Beijing 100025 (CN); LI, Dan, Beijing 100025 (CN)
(74) Representative: Lahrtz, Fritz
(86) International application number: PCT/CN2016/081828
(87) International publication number: WO 2017/071178

(57) **Abstract**

The embodiment of the present disclosure provides a charging post and an intelligent transportation system. The charging post comprises a charging plug connected to a charging power source; a network module configured to establish network connection; a communication control module wirelessly connected to vehicle devices disposed in a vehicle, establishing a network connection with a dispatching center through the network module for receiving the real-time information collected from the vehicle devices and transmitting to the dispatching center, receiving a control command generated by the dispatching center according to the real-time information or a traffic information, and transmitting the control command to the vehicle devices such that the control command is executed by the vehicle devices for achieving control of the vehicle. The embodiment of the present disclosure improves the utilization of charging posts.

## Description

### CROSS-REFERENCE TO RELATED APPLICATIONS

This application references to Chinese Patent Application No. 201510729663.1, filed October 30, 2015, entitled "charging post and intelligent transportation system", the content of which is incorporated herein by reference in its entirety.

### FIELD OF TECHNOLOGY

The present disclosure relates to a field of electric vehicles, and more particular to a charging post and an intelligent transportation system.

### BACKGROUND

Electric vehicles are more and more popular with the energy crisis, environmental pollution, and the public awareness of environmental protection. Therefore, the amount of charging posts is increased more and more. Charging posts are facilities for electric vehicles charging.

Because the amount of charging posts is increased more and more, current charging posts simply charge electric vehicles with the unitary function and have not been fully utilized.

### SUMMARY

The disclosure provides a charging post and an intelligent transportation system to solve technical issues related to the unitary function and the low utilization of the charging post in the prior art.

An embodiment of the present disclosure provides a charging post, including:
a charging plug connected to a charging power source;
a network module configured to establish a network connection;
a communication control module which is wirelessly connected to vehicle devices disposed in a vehicle and establishes a network connection with a dispatching center through the network module, and is configured to receive the real-time information collected from the vehicle device and transmit the real-time information to the dispatching center; receive a control command generated by the dispatching center according to the real-time information or a traffic information, and transmitting the control command to the vehicle device such that the control command is executed by the vehicle devices to achieve the control of the vehicle.

An embodiment of the present disclosure provides an intelligent transportation system, including: a vehicle device disposed in the vehicle, a dispatching center and an aforementioned charging post;
wherein the charging post is connected to the vehicle device and the dispatching center respectively, receives a real-time information collected from the vehicle device and transmits to the dispatching center; receives a control command generated by the dispatching center according to the real-time information and a traffic information, and transmits the control command to the vehicle device such that the control command is executed by the vehicle devices for achieving the control of the vehicle.

The charging post of the embodiment of the present disclosure includes the charging plug, an accounting processing module, a network module and a communication control module. The charging post achieves to charge the electric vehicles, integrates the vehicle devices and the dispatching center, achieves the control of the vehicle, and improves the function of the charging post, so that the charging posts have been fully utilized to improve the utilization.

### BRIEF DESCRIPTION OF THE DRAWINGS

In order to illustrate the technical schemes of the prior art or the embodiments of the present disclosure more clearly, the accompanying drawings for illustrating the prior art or the embodiments of the present disclosure are briefly described as below. It is apparent that the drawings described below are merely some embodiments of the present disclosure, and those skilled in the art may derive other drawings according the drawings described below without creative endeavor.

Fig. 1 is a schematic diagram of a charging post according to an embodiment of the present disclosure;
Fig. 2 is the schematic diagram of a charging post according to another embodiment of the present disclosure;
Fig. 3 is the schematic diagram of the charging post according to another embodiment of the present disclosure;
Fig. 4 is the schematic diagram of the charging post according to another embodiment of the present disclosure;
Fig. 5 is the schematic diagram of a charging post according to another embodiment of the present disclosure; and
Fig. 6 is a schematic diagram of an intelligent transportation system according to the embodiment of the present disclosure.

### DESCRIPTION OF THE EMBODIMENTS

For the purpose, technical solution, and advantage of the present disclosure becoming clearer, the specific embodiments of the present disclosure combined with the accompanying drawings to clearly and completely are described as follows. Obviously, the described embodiments are only part of the embodiments of the present disclosure rather than all embodiments. Based on the embodiments of the present disclosure all other embodiments obtained by those having ordinary skills in this field without creative work are within the scope of protection of the present disclosure.

In order to improve the utilization of the charging post to fully utilize the charging post, the inventors found that the development of intelligent transportation systems are promoted in the study in order to reduce accidents and improve traffic efficiency. Since the popularity of electric vehicles, the amount of charging posts is increased more and more. Therefore, the inventors, through a series of creative thinking, propose applying charging posts to an intelligent transportation systems to achieve to control the vehicle through the charging post, for example, navigating the vehicle according to the traffic, providing the repair station address when vehicle breakdowns and notifying location information of charging posts to the vehicle to facilitate charging posts found by the vehicle. In the embodiment of the present disclosure, the charging post mainly includes a charging plug connected to a charging power source, an accounting processing module connected to the charging plug, a network module, and a communication control module connected to the network module. Thus, not only the charging but also integrates the vehicle devices and the dispatching center are integrated to achieve the control of the vehicle. The charging posts have been fully utilized and the utilization of the charging post is improved.

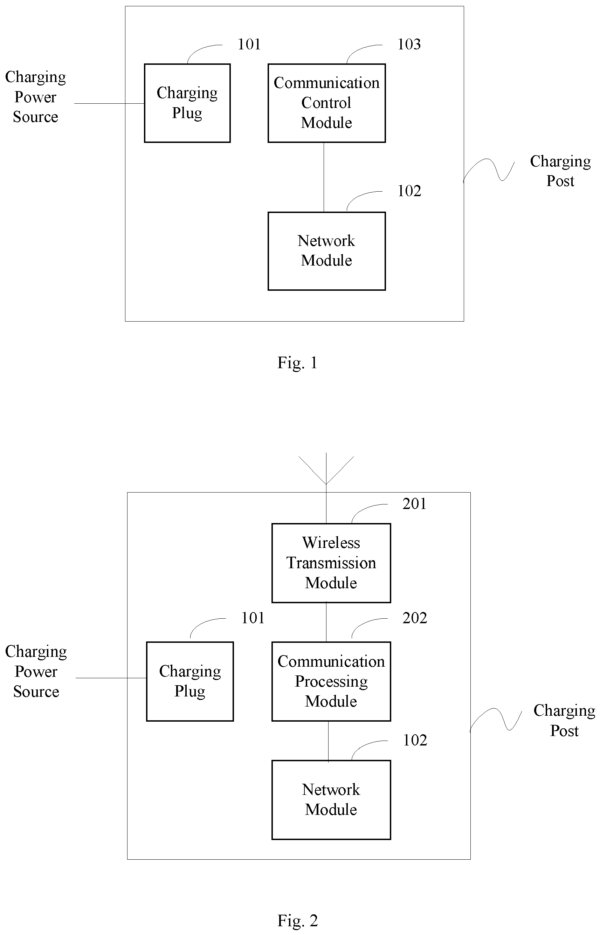

Fig. 1 is a schematic diagram of the charging post according to an embodiment of the present disclosure. The charging post includes:
a charging plug 101 connected to a charging power source;
a network module 102 configured to establish network connection;
a communication control module 103 which is wirelessly connected to vehicle devices disposed in a vehicle and establishes a network connection with a dispatching center through the network module 102, and is configured to receive real-time information collected from the vehicle devices and transmit to the dispatching center; receive a control command generated by the dispatching center according to the real-time information or a traffic information, and transmit the control command to the vehicle devices such that through the control command is executed by the vehicle devices to achieve the control of the vehicle.

The charging power source may be specifically embodied as a grid voltage, usually 220V (unit: Voltage). After the electric vehicle connects to the charging plug 101, the charging power source begins to charge the electric vehicle.

The network module 102 in practical applications can be a gateway router to achieve interconnection with external networks.

It is understood that the charging post must include a housing. For easily using, the charging plug can be disposed on the outer surface of the housing, and the network module and a communication module may be provided within the housing, in order to improve the safety and the appearance of the charge post.

The charging post of the embodiment of the present disclosure includes the communication control module, not only achieving to charge the electric vehicle but also connecting to the vehicle devices disposed in the vehicle and the dispatching center.

The vehicle devices and the dispatching center may specifically be the equipment in the existing intelligent transportation system. The charging post is also the part of the intelligent transportation system, and integrates the vehicle devices and the dispatching center to achieve the control of the vehicle and the traffic monitoring.

The real-time information collected by the vehicle device may include a vehicle location information, a vehicle breakdown information and a vehicle driving information. The vehicle driving information may include a driving speed, a driving time, driving operations and other information.

The dispatching center may generate corresponding control commands according to the real-time information or the traffic information, transmit to the vehicle device through the communication control module to be executed by the vehicle device for achieving the control of the vehicle.

For example, a vehicle maintenance command is generated according to the vehicle location information and the vehicle breakdown information and the vehicle maintenance command carries a repair information. The repair information may be an address of a vehicle maintenance point within a range of distance from the vehicle location. The vehicle device executes the vehicle maintenance command and outputs the repair information.

For example, a navigation command is generated according to the vehicle location information and the traffic information and carries the navigation route information with no congested traffic. The vehicle device executes the vehicle navigation command and outputs the navigation route information.

For example, a warning command is generated according to the vehicle driving information. The vehicle device executes the warning command and outputs the warning prompt to remind the user of the over speed, or driver fatigue or whether the proper driving operation is performed.

The charging post of the embodiment of the present disclosure is also equivalent to the roadside equipment of the intelligent transportation system to achieve the information transmission and other functions. The charging posts may be disposed in various places throughout the city as there is a large amount of charging posts. The intelligent traffic management is achieved by using charging posts, so that the charging posts have been fully utilized to improve the function of charging post.

Of course, charging posts as roadside equipment of the intelligent transportation system mainly achieves the interaction of the information and commands. There are still some functions of the intelligent transportation system may be achieved. The embodiments of the present disclosure are no longer listed.

In the embodiment of the present disclosure, the communication control module may transmit the charging post information to the vehicle device. The charging post information may include a location information and navigation information according to the locations of the vehicle device and the charging post. The navigation information is a route information from the location of the vehicle device to the location of the charging post in order to navigate user arrive the location of the charging post.

Wherein, the wireless connection may be directly established between the communication control module and the vehicle device. The wireless connection may specifically be a DSRC (Dedicated Short Range Communications) connection. The wireless connection established between the vehicle devices in the range of 1000 meters may be achieved by using DSRC. The maximum communication range can exceed 1000 meters.

In another embodiment, as shown in Fig. 2, is distinct from the embodiment shown in Fig. 1. The communication control module includes a wireless transmission module 201 and a communication processing module 202.

The wireless transmission module 201 is connected to the communication processing module 202. The communication processing module 202 is specifically connected to the network module 102.

The wireless transmission module 201 is specifically connected to the vehicle device disposed on the vehicle and the data exchanging with the vehicle device is achieved.

The communication processing module 202 specifically is configured to receive the real-time information collected by the vehicle device through the wireless transmission module 201 and transmits to the dispatching center. The communication processing module 202 receives the control commands generated by the dispatching center according to the real-time information and the traffic information and transmits the control commands to the vehicle devices to execute.

In practical applications, the communication control module is a microcontroller, a processor or an integrated circuit including the microcontroller or the processor. The present disclosure is not specifically limited to this.

The wireless transmission module further includes DSRC antennas. DSRC antennas include two antennas and connect to the transmitter and receiver respectively. The corresponding vehicle devices also are disposed DSRC antennas.

The coverage range of DSRC antennas is about 300 to 1000 meters and the communication with high mobility and high real-time is satisfied.

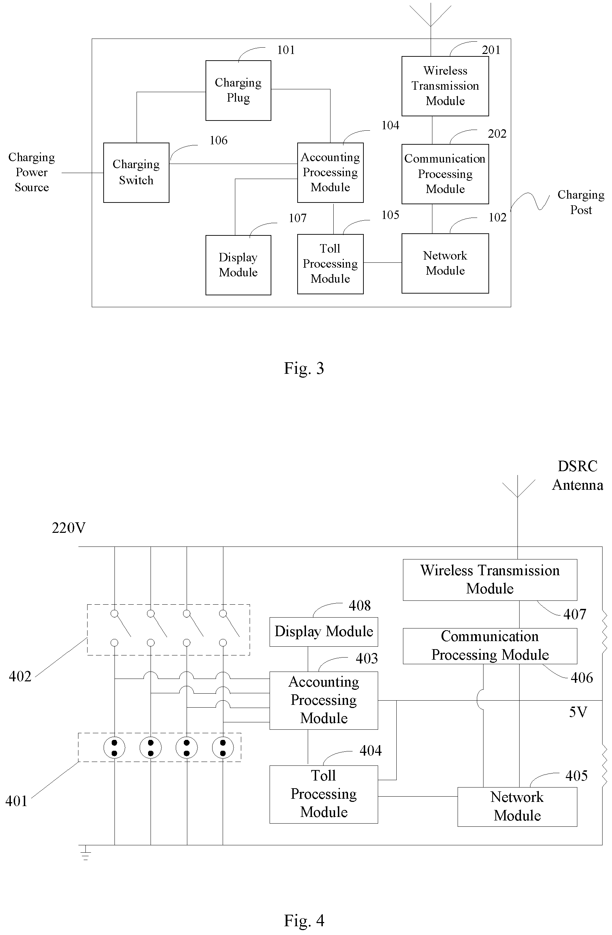

In order to facilitate the cost calculating, in another embodiment, as shown in Fig. 3, is distinct from the embodiment shown in Fig. 2. An accounting processing module 104 is connected to the charging plug 101 and configured to calculate a charging level, a charging time and a charging fee.

The accounting processing module 104 can calculate and measure the charging level, the charging time, the charging fee and other charging situations.

In order to facilitate users paying, in another embodiment, as shown in Fig. 3, the charging post further includes a toll processing module 105 connected to the accounting processing module 104. The toll processing module is connected with the network module and establishes a network connection with a toll system through the network module. After receiving a toll card, the toll processing module establishes a network connection with a toll system through the network module, and notifies the toll system to deduct from an account corresponding to the toll card according to a charging fee calculated by the accounting processing module.

The toll card is a debit card, rechargeable card or others. When the toll card is the debit card, the toll system means a bank system and the account corresponding to the toll card means a bank account corresponding to the debit card.

The connection between the toll processing module and the toll card could be a sensing connection by using the electromagnetic induction to read the information of debit card.

In another embodiment, the charging post may include a toll card slot. The toll processing module is connected with the toll card slot. When the toll card slot is inserted with the toll card, the toll processing module links up the toll card and reads the information of toll card.

The toll card slot may include a plurality of slots and support to debit cards of different banks or rechargeable cards of different types.

The toll processing module is a microcontroller, a processor or an integrated circuit including the microcontroller or the processor. The present disclosure is not specifically limited to this.

In order to facilitate to control the charging of electric vehicle, in another embodiment, as shown in Fig. 3, the charging post further includes a charging switch 106 connecting in series between the charging plug 101 and the charging power source. The charging switch 106 is connected to the accounting processing module 104.

When the electric vehicle connects to the charging plug and the charging switch turns on, the charging power source starts to charge the electric vehicle. When the electric vehicle connects to the charging plug and the charging switch turns off, the charging power source stops to charge the electric vehicle.

Therefore, the accounting processing system calculates the charging level, the charging time and the charging fee when the charging switch is turned on. The accounting processing system stops calculating the charging level, the charging time and the charging fee when the charging switch is turned off.

The charging plug of the embodiment in the present disclosure includes a plurality of charging plugs. The plurality of charging plugs are in a parallel connection, and therefore the plurality of charging plugs charging the plurality of electric vehicles is achieved.

The plurality of charging plugs may include different types and match with the different plugs.

Each charging plug is in a series connection with one charging switch when the charging post includes the charging switches.

In order to facilitate users knowing the situation of charging and fee, as shown in Fig. 3, the charging post further includes a display module 107 connected to the accounting processing module 102.

The display module 107 is configured to display the charging level, the charging time and the charging fee from the accounting processing module 104.

The toll processing module 105 further notifies the accounting processing module 104 after successfully deducting.

When receiving information of the tolling processing system successful deduction from the accounting processing module 104, the display module 107 displays prompt information of successful deduction.

The charging post further includes a power supply module connected with the accounting processing module, the toll processing module, the network module and the communication control module respectively and supplies power to each module. The power supply module may select 5V or 7V.

Fig. 4 illustrates a circuit schematic diagram of the charging post in practical application according to the embodiment of the present disclosure. The charging post includes a charging plug 401, a charging switch 402, an accounting processing module 403, a toll processing module 404, a network module 405, a communication processing module 406, a wireless transmission module 407 and a display module 408.

The charging plug 401 is connected with a 220V power source for charging the electric vehicle. The accounting processing module 403, the toll processing module 404, the network module 405, the communication processing module 406 and the wireless transmission module 407 are connected with a 5V power source for achieving the power supply.

The communication processing module 406 includes an antenna, specifically a DSRC antenna. The antenna specifically may include two sets.

The network module 404 may specifically be a network router.

Specific configuration of each module and the connection relationship can refer to the above description to the embodiment, and it not repeated herein.

The embodiment of the present disclosure not only charges the electric vehicles but also integrates the vehicle devices and the dispatching center, and achieves the control of the vehicle. The charging posts have been fully utilized and the utilization of the charging post is improved.

The charging posts in any aforementioned embodiment further include a housing. For users easily using, the charging plug is disposed on the outer surface of the housing and the display module is also disposed on the outer surface of the housing. The accounting processing module, the toll processing module, the network module, the communication processing module and the wireless transmission module may be provided within the housing, in order to facilitate the circuit routing, improve the safety and appearance of the charge post.

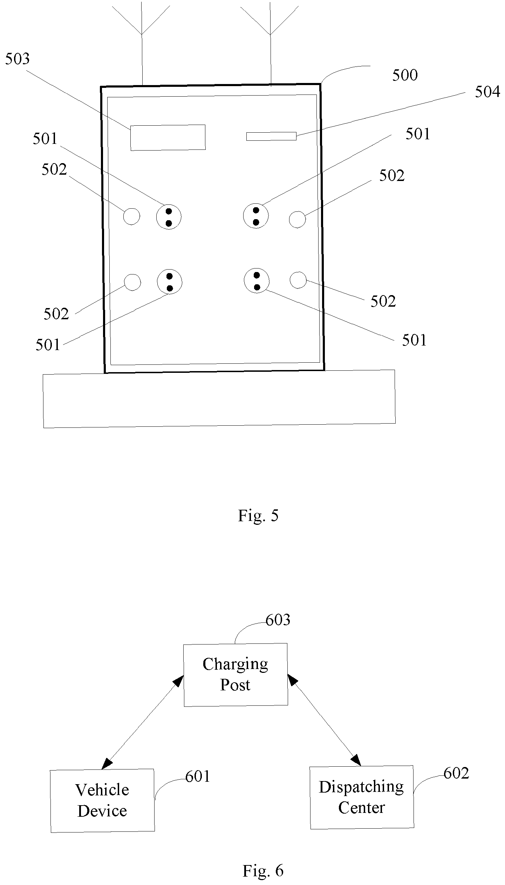

Another schematic diagram of the charging post as shown in Fig. 5, includes a housing 500, a charging plug 501 disposed on the surface of housing 500, a charging switch 502 and a display module 503. The charging posts further include a toll card slot 504.

The accounting processing module, the toll processing module, the communication control module, the power supply module and the network module may be provided within the housing, not shown in Fig. 5. Fig. 5 is described from the outside of the housing of the charging post.

Specific connection configuration can be described with reference to the aforementioned embodiments.

It should be noted that the charging plugs and the charging switches in Fig. 4 and Fig. 5 are illustrated in four sets respectively. The specific amount of the charging plug and charging switch in the present disclosure is not limited thereto.

The present disclosure further provides an intelligent transportation system, as shown in Fig. 6. The intelligent transportation system includes a vehicle device 601, a dispatching center 62 and a charging post 603.

Specifically, the charging post 603 is any one charging post in the aforementioned embodiment.

The charging post connects to the vehicle and the dispatching center respectively, receives a real-time information collected from the vehicle devices, transmits the real-time information to the dispatching center, receives a control command generated by the dispatching center according to the real-time information or a traffic information, and transmits the control command to the vehicle devices such that the control command is executed by the vehicle devices for achieving control of the vehicle.

The real-time information collected by the vehicle device may include a vehicle location information, a vehicle breakdown information and a vehicle driving information. The vehicle driving information may include a driving speed, a driving time, driving operations and others information.

The dispatching center may generate corresponding control commands according to the real-time information or the traffic information, transmit to the vehicle device through the communication control module to be executed by the vehicle device for achieving the control of the vehicle.

For example, a vehicle maintenance command is generated according to the vehicle location information and the vehicle breakdown information and the vehicle maintenance command carries repair information. The repair information may be an address of a vehicle maintenance point within a range of distance from the vehicle location. The vehicle device executes the vehicle maintenance command and outputs the repair information.

For example, a navigation command is generated according to the vehicle location information and the traffic information and carries the navigation route information with no congested traffic. The vehicle device executes the vehicle navigation command and outputs the navigation route information.

For example, a warning command is generated according to the vehicle driving information. The vehicle device executes the warning command and outputs the warning prompt to remind the user whether the over speed, whether driver fatigue or whether the proper driving operation is performed.

The apparatus embodiments described above are merely illustrative, wherein the unit described as a separate member may or may not be physically separate, and the component shown as a unit may or may not be physical units, i.e., it may be located in one place, or may be distributed to various network elements. Some or all of the modules may be selected to achieve the purpose of the present examples of the embodiments according to the actual need. Those of ordinary skill in the case may understand and implement the present disclosure without paying any creative work.

The above description of embodiments, those skilled in the art can clearly understand the various embodiments may be implemented by software plus a necessary universal hardware platform for implementation, and of course, also be implemented by hardware. Based on this understanding, the nature of the technical proposal or the part contributing to the prior art may be embodied in the form of a software product. The computer software product may be stored in a computer readable storage medium, such as ROM/RAM, magnetic disc, CD-ROM, including several instructions to instruct a computer device (a personal computer, a server, or a network equipment) to perform the method described in some parts of the various embodiments or examples.

Finally, it should be noted that the above embodiments are merely provided for describing the technical solutions of the present disclosure, but not intended to limit the present disclosure. Although reference to the embodiments of the present disclosure has been described in details, those skilled in the art will appreciate that the technical solutions described in the foregoing embodiments can be modified, or equivalently replaced for some technical features; and such modifications or replacements do not make the essence of the corresponding technical solutions depart from the spirit and scope of the technical implementation of the present disclosure.

## Claims

1. A charging post, comprising:
a charging plug connected to a charging power source;
a network module configured to establish a network connection;
a communication control module which is wirelessly connected to vehicle devices disposed in a vehicle and establishes a network connection with a dispatching center through the network module, and is configured to receive real-time information collected from the vehicle devices and transmit the real-time information to the dispatching center; receive a control command generated by the dispatching center according to the real-time information or traffic information, and transmit the control command to the vehicle devices such that the control command is executed operated by the vehicle devices to achieve the control of the vehicle.

2. The charging post of claim 1, wherein the communication module comprises:
a communication processing module connected to the network module; and
a wireless transmission module connected to the communication processing module;
wherein the communication processing module is configured to receive the real-time information collected by the vehicle devices through the wireless transmission module and transmit to the dispatching center, receives the control command generated by the dispatching center according to the real-time information and the traffic information, and transmits the control commands to the vehicle devices, thereby achieving the control of the vehicle through the control command executed by the vehicle devices.

3. The charging post of claim 1, further comprising:
an accounting processing module connected to the charging plug and configured to calculate a charging level, a charging time and a charging fee.

4. The charging post of claim 3, further comprising:
a toll processing module connected to the accounting processing module and configured to receive a toll card, establish a network connection with a toll system through the network module, and notify the toll system to deduct from an account corresponding to the toll card according to a charging fee calculated by the accounting processing module.

5. The charging post of claim 3, further comprising
a charging switch connected in series between the charging plug and the charging power source; wherein the charging switch is connected to the accounting processing module, and the accounting processing module is specifically configured to calculate the charging level, the charging time and the charging fee when the charging switch is turned off.

6. The charging post of claim 3, further comprising:
a display module connected to the accounting processing module;
wherein the display module is configured to display the charging level, the charging time and the charging fee from the accounting processing module and display prompt information of successful deduction when receiving information of successful deduction from the accounting processing module.

7. The charging post of claim 1, wherein the charging plug comprises a plurality of charging plugs connected in parallel.

8. The charging post of claim 2, wherein the wireless transmission module comprises a DSRC (Dedicated Short Range Communication) antenna; the wireless transmission module is configured to establish a DSRC connection with the vehicle devices and exchange data with the vehicle devices which are away from the charging post in a maximum range of the 1000 meters through the DSRC antenna.

9. The charging post of claim 1, wherein the communication control module is configured to transmit location information of the charging post to the vehicle devices and generate navigation information according to the locations of the vehicle devices and the charging posts.

10. An intelligent transportation system, comprising a vehicle device disposed in the vehicle, a dispatching center and the charging post according to any one of claim 1 to 9; wherein the charging post is connected to the vehicle devices and the dispatching center respectively, receives a real-time information collected from the vehicle devices and transmits to the dispatching center, receives the control commands generated by the dispatching center according to the real-time information and a traffic information, and transmits the control commands to the vehicle devices, thereby achieving control of the vehicle through the control commands executed by the vehicle devices.
